# EUROPEAN PATENT APPLICATION

(11) **EP 3 839 851 A1**
(43) Date of publication of application: **23.06.2021**
(21) Application number: 20215647.7
(22) Date of filing: 18.12.2020
(51) Int. Cl.: G06Q 20/02

(54) **TRANSACTION SUBMISSION PROCESSING OVER DISTRIBUTED LEDGER NETWORKS**

(30) Priority: 19.12.2019 US 201962950771 P
(71) Applicant: London Stock Exchange PLC, London EC4M 7LS (GB)
(72) Inventor: Barnes, Robert, London, EC4M 7LS (GB); Simmons, Tom, London, EC4M 7LS (GB); Blewitt, Neil, London, EC4M 7LS (GB); Coletta, Michael, London, EC4M 7LS (GB); Rominiyi, Dotun, London, EC4M 7LS (GB); Turrell, Richard, London, EC4M 7LS (GB)
(74) Representative: Lawrie IP Limited

(57) **Abstract**

Systems for processing transaction submissions over a distributed ledger network are provided. Such a system includes an exchange platform and a settlement platform. The settlement platform is to generate settlement instructions comprising a set of net positions held by transaction participants with respect to transaction submissions submitted to the exchange platform by the transaction participants for exchange of assets via an off-ledger settlement entity. The settlement platform is to host a private distributed ledger network to store a record of positions held by the transaction participants with respect to the assets, update the record of positions according to the settlement instructions, and transmit an update of the record of positions to the off-ledger settlement entity.

## Description

### CROSS-REFERENCE TO RELATED APPLICATION

This application claims priority from U.S. Provisional Patent Application No. 62/950771, filed December 19, 2019, the contents of which is incorporated herein by reference.

### FIELD

The present specification relates to the processing of digital information, and in particular to the processing of digital information on distributed ledger networks.

### BACKGROUND

A distributed ledger, also known as a blockchain, is a decentralized store of digital information. The information is stored in sequential blocks of data which are maintained and validated by nodes of a peer-to-peer network. Information that is added to the distributed ledger is verified by one or more of the nodes and propagated through the network. An update to the information stored on the distributed ledger may be characterized as a transaction, and may reflect a real-world transaction made off-ledger.

### SUMMARY

According to an aspect of the disclosure, a system for processing transaction submissions over a distributed ledger network is provided. The system includes an exchange platform to generate settlement instructions comprising a set of net positions held by transaction participants with respect to transaction submissions submitted to the exchange platform by the transaction participants for exchange of assets via an off-ledger settlement entity. The system further includes a settlement platform to host a private distributed ledger network to store a record of positions held by the transaction participants with respect to the assets, update the record of positions according to the settlement instructions, and transmit an update of the record of positions to the off-ledger settlement entity.

The settlement platform may maintain a mapping of legal holdings to beneficial holdings of the assets. The record of positions may be updated according to the mapping of legal holdings to beneficial holdings of the assets. The settlement platform may maintain a mapping of legal holdings to beneficial holdings of the assets, and the record of positions may be updated according to the mapping. The settlement platform may maintain a data store of cryptographic keys of the settlement platform. The settlement platform may maintain a data store of cryptographic keys of the exchange platform. The settlement platform may maintain a data store of cryptographic keys of the transaction participants. The settlement platform may validate each transaction submission with the cryptographic keys prior to update of the record of positions. The settlement platform may maintain a data store of cryptographic keys of the settlement platform, the exchange platform, and the transaction participants, and may validate each transaction submission with the cryptographic keys prior to update of the record of positions. Each transaction submission may include a short code that identifies the transaction participant submitting the transaction submission. The private distributed ledger network may maintain a mapping of short codes to cryptographic keys. For each respective transaction submission, the settlement platform may map each short code to a cryptographic key prior to validation of the respective transaction submission. The mapping may involve at least mapping a short code of a transaction participant short code to a cryptographic key. The mapping may involve mapping of a beneficial owner short code to a cryptographic key. Each transaction submission may include a short code that identifies the transaction participant submitting the transaction submission, and the private distributed ledger network may maintain a mapping of short codes to cryptographic keys, and, for each respective transaction submission, the settlement platform may map each short code to a cryptographic key prior to validation of the respective transaction submission. A transaction submission may include one or more short codes. A transaction submission may include one or more short codes that identify both the legal and beneficial owners of the assets involved in the transactions. Where the transaction submissions include short codes, these short codes may be carried through to the settlement instructions for transmission to the settlement platform. Communications related to transaction submissions taking place off-exchange may be made with reference to such short codes.

According to another aspect of the disclosure, a process for settling transaction submissions via a distributed ledger network is provided. The process involves receiving, on a private distributed ledger, settlement instructions, the settlement instructions comprising a set of net positions held by transaction participants with respect to transaction submissions submitted to an exchange platform by the transaction participants for exchange of assets via an off-ledger settlement entity. The process further involves broadcasting, from the private distributed ledger, a notification of receipt of the settlement instructions, generating a set of transactions to carry out the settlement instructions on the private distributed ledger, and initiating, on the private distributed ledger, execution of the set of transactions. The process further involves broadcasting, from the private distributed ledger, a notification of completion of the settlement instructions, and transmitting an update to a record of positions to the off-ledger settlement entity, the record of positions defining obligations held by the transaction participants with respect to the assets, the update based on execution of the set of transactions, the update to the record of positions for registration at the off-ledger settlement entity.

The process may involve maintaining a mapping of legal holdings to beneficial holdings of the assets. Generating the set of transactions may involve using the mapping to map legal holdings of the assets to beneficial holdings of the assets. The process may involve maintaining a mapping of legal holdings to beneficial holdings of the assets and generating the set of transactions involves using the mapping to map legal holdings of the assets to beneficial holdings of the assets. The process may involve maintaining cryptographic keys of a settlement entity. The process may involve maintaining cryptographic keys of the exchange platform. The process may involve maintaining cryptographic keys of the transaction participants. The process may, prior to generating the set of transactions, validate each transaction submission with the cryptographic keys. The process may involve maintaining cryptographic keys of a settlement entity, the exchange platform, and the transaction participants, and, prior to generating the set of transactions, validating each transaction submission with the cryptographic keys. Each transaction submission may include a short code that identifies the transaction participant submitting the transaction submission. The process may further involve maintaining, on the private distributed ledger, a mapping of short codes to cryptographic keys. The process may involve, for each respective transaction submission, mapping each short code to a cryptographic key prior to validation of the respective transaction submission. The process may further involve maintaining, on the private distributed ledger, a mapping of short codes to cryptographic keys, and, for each respective transaction submission, mapping each short code to a cryptographic key prior to validation of the respective transaction submission. The process may involve maintaining, on the private distributed ledger, a mapping of short codes to third party identifiers. The process may involve, prior to initiating execution of the set of transactions, determining whether a particular transaction participant is a legal owner of a sufficient quantity of assets to settle a subset of transactions of which the particular transaction participant is a participant, and upon determining that the particular transaction participant is the legal owner of the sufficient quantity of assets, proceeding to initiate execution of the set of transactions, and upon determining that the particular transaction participant is not the legal owner of the sufficient quantity of assets, proceeding to obtain a transferred quantity of assets sufficient to settle the subset of transactions of which the particular transaction participant is a participant. The process may involve determining whether the particular transaction participant is the legal owner of the sufficient quantity of assets comprises determining whether the particular transaction participant is the legal owner of the sufficient quantity of assets held in a first account at a first settlement entity, and obtaining the transferred quantity of assets comprises obtaining the transferred quantity of assets from a second account at a second settlement entity. The first settlement entity may correspond to a first jurisdiction and the second settlement entity may correspond to a second jurisdiction. The process may involve, upon obtaining the transferred quantity of assets from the second account at the second settlement entity, transferring an equal value of assets from the first account to the second account in consideration for the transferred quantity of assets.

According to yet another aspect of the disclosure, a system for processing transaction submissions over a distributed ledger network is provided. The system includes a first exchange platform corresponding to a first jurisdiction, the first exchange platform to generate settlement instructions comprising a set of net positions held by transaction participants with respect to transaction submissions submitted to the first exchange platform by the transaction participants for exchange of assets via a first off-ledger settlement entity. The system further includes a second exchange platform corresponding to a second jurisdiction, the second exchange platform to generate settlement instructions comprising a set of net positions held by transaction participants with respect to transaction submissions submitted to the second exchange platform by the transaction participants for exchange of assets via a second off-ledger settlement entity. The system further includes a settlement platform to host a private distributed ledger network to store a record of positions held by the transaction participants with respect to assets traded at the first exchange platform and the second exchange platform, update the record of positions according to the settlement instructions generated at the first exchange platform and the second exchange platform, and transmit an update of the record of positions to the first off-ledger settlement entity and the second off-ledger settlement entity.

The private distributed ledger network may host a first asset register corresponding to the first exchange platform, host a second asset register corresponding to the second exchange platform, and host a distributed accounts relay to obtain a transferred quantity of assets from the second asset register to enable a particular transaction participant to settle a transaction involving a trade for an asset held at the first asset register for which the particular transaction participant has insufficient assets at the first asset register to settle.

According to yet another aspect of the disclosure, a method for admitting new or existing assets onto a system for processing transaction submissions over a distributed ledger network is provided. The method involves receiving a request for admission of an asset onto a transaction settlement system and generating a cryptographic key pair associated with the asset. The method further involves receiving an indication that the asset is to be immobilized such that the distributed ledger network maintains a one-to-one relationship between the asset on an asset register and the asset held in custody off-ledger, or an indication that the asset is to be dematerialized such that an on-ledger representation of the asset confers legal title to the new asset. The method further involves creating a record of positions on the distributed ledger network, the record of positions, the record of positions defining obligations held by transaction participants with respect to assets traded over the distributed ledger network. The method further involves receiving indications of legal and beneficial holders of the assets traded over the distributed ledger network and matching the indications of legal and beneficial holders of the assets with the record of positions.

The method may involve generating a short code associated with the cryptographic key pair, the short code to identify a transaction participant to issue the new asset and associating the short code with the cryptographic key pair.

### BRIEF DESCRIPTION OF THE DRAWINGS

FIG. 1 is a schematic diagram of an example system for processing transaction submissions over a distributed ledger network.
FIG. 2 is a schematic diagram of an example node of a distributed ledger network.
FIG. 3A is a flowchart of an example method for admitting securities onto a system for processing transaction submissions over a distributed ledger network.
FIG. 3B is a flowchart of an example process for settling transaction submissions via a distributed ledger network.
FIG. 3C is a flowchart of an example process for settling a transaction via a distributed ledger network involving multiple settlement entities.
FIG. 4 is a schematic diagram of an example settlement entity system for processing transaction submissions over a distributed ledger network.
FIG. 5 is a flowchart of another example process for settling transaction submissions via a distributed ledger network.
FIG. 6 is a flowchart of an example process for registering cryptographic keys and short codes for transaction participants in a system for processing transaction submissions over a distributed ledger network.
FIG. 7 is a schematic diagram of an example settlement entity system for processing transaction submissions over a distributed ledger network involving multiple settlement entities.

### DETAILED DESCRIPTION

Historically, stock exchanges have provided an efficient mechanism for companies to raise funds at scale through the issuance of primary capital, reducing risk for investors by providing an active secondary market for them to trade securities which have been issued. Providing this liquidity means that high-volume asset exchange entities, can receive and process millions of transaction submissions (e.g. for the exchange of securities) per day automating the exchange of securities which are admitted to trading against payment received from investors in a settlement process called delivery-versus-payment (DvP). Facilitating the smooth handling of transactions which can be high in value, high in volume or both, poses an immense technical challenge. Further, the enormous value behind such transactions calls for scrupulous regulation and oversight. Thus, such asset exchange markets are increasingly characterized by a chain of specialized actors, meaning that investors are faced with navigating several layers of intermediation placed between them, as beneficial owners of the assets, and the underlying company and its securities. Whilst this can lead to increased efficiency as individual interactions are optimized along the chain it can also lead to increased transaction costs as successful completion of a transaction requires the involvement of an increasing number of participants using separate systems. This can lead to activity naturally coalescing around participants who are the heaviest users of such markets and who are able to harness economies of scale.

Creating a framework for the recognition of assets in digital form on a common digital ledger technology layer can provide the mechanism to broaden the investor base able to participate in capital markets. Existing off-ledger asset exchange technical infrastructure may be integrated with the network, whilst the technology can provide the technical scalability to process high volumes of transactions, as well as the transparency and configurability to satisfy legal and regulatory needs at a systemic level. The end result is that Distributed ledger technology may provide for various configurations of participants and securities depending on the functional and liquidity needs for a particular asset, from illiquid private assets through to multinational, highly liquid issuers.

Thus, described herein is a system to enable a model for the recognition of existing assets in digital form, issuance of assets in native digital form and subsequent trading of such securities using a fully electronic secondary market and settlement system. The model allows for a variety of capital markets participants to connect to the system and provide services, providing a unified view of legal and beneficial interests in digital assets. Whilst in this application when referring to assets references are frequently made to a DvP transaction of securities against cash currency, the system described is capable of being used for the recognition and trading of any type of asset which is a store of value and which can be held in custody.

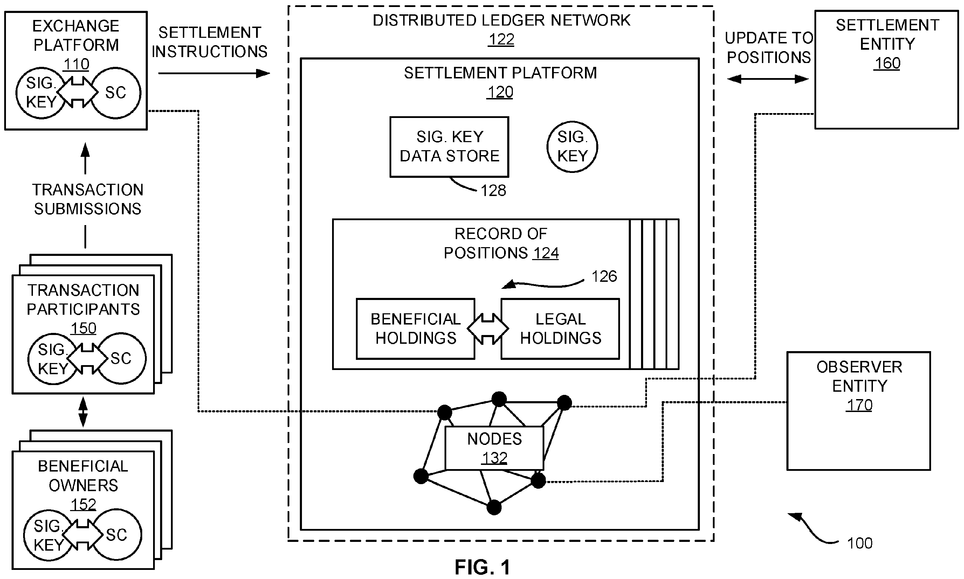

FIG. 1 is a schematic diagram of an example system 100 for processing transaction submissions over a distributed ledger network. Access to the system 100 may be provided by a platform associated with an asset exchange entity as an interface between off-ledger transaction processing and transaction processing over a distributed ledger.

The system 100 includes an exchange platform 110 to generate settlement instructions for submission to a settlement platform 120. In addition to its primary role as a trading venue, the exchange platform 110 may also include a portal providing functions not related to the trading of assets but relevant to the administration of any other aspects of its participation on the DLT network. The exchange platform 110 is associated with an off-ledger asset exchange platform, such as a securities exchange at which securities are traded by brokers. As such, settlement instructions may be generated by bilateral trades reported to the exchange or by the automated matching of orders submitted to the exchange platform 110. The settlement platform 120 is associated with a settlement entity, such as a central securities depository, who has responsibility for updates to the records of legal ownership of the assets in question.

The settlement instructions include a set of net positions held by transaction participants 150 with respect to transactions executed on or submitted to the exchange platform 110 by the transaction participants 150 for exchange of assets. Settlement instructions may comprise a set of instructions that have been netted over a period of time to give effect to the transaction submissions without redundant transactions. Transaction submissions may include orders to buy, sell or borrow any of the assets exchanged at the off-ledger asset exchange entity, including new orders, order amendments, order cancellations, order expiries, or trades, including off-exchange trades. A net position reflects an obligation of a transaction participant 150.

A transaction participant 150 may participate in a transaction on behalf of a beneficial owner 152 of an asset. A transaction submission may include a single order to buy, sell or borrow an asset on behalf of a single beneficial owner 152. In some cases, a transaction submission may include a block of orders to buy, sell or borrow assets on behalf of a single beneficial owner 152, or a block of orders to purchase, sell, or trade one or more assets on behalf of multiple beneficial owners 152. When a transaction submission includes orders made on behalf of multiple beneficial owners 152, the transaction submission may include information to identify the beneficial owners 152 so that title to the assets may be updated, as discussed herein.

The system 100 further includes a settlement platform 120, mentioned above, hosted on a private distributed ledger network 122 to store a record of positions 124 held by the transaction participants 150 with respect to the assets exchanged via the off-ledger asset exchange entity.

The record of positions 124 may be viewable by one or more nodes 132 of the distributed ledger network 122, including nodes 132 operated by entities operating the exchange platform 110, settlement platform 120, and transaction participants 150 each may interact with the distributed ledger network 122 via one or more nodes 132.

The settlement platform 120 is further to update the record of positions 124 according to the settlement instructions. The benefits of updating the record of positions 124 on the distributed ledger network 122 may include, among others, the computational efficiencies attained by distributing transaction computations across a plurality of nodes 132, the security afforded by a verified record of transactions verified by the nodes 132, the ability to enforce network governance by building smart contracts into the distributed ledger network 122 that restrict the record of positions 124 from being updated in a manner that is not in line with regulatory and oversight requirements, and the ability to tailor smart contracts for legal and regulatory requirements in different jurisdictions whilst providing a harmonized view of cross-border flows in a particular asset.

Depending on the asset in question, the settlement platform 120 may further transmit a request to update the record of positions to a settlement entity's off-ledger settlement system 160 (for example where the legal interest in the asset is not capable of being directly recorded on the DLT network due to practical or legal considerations). The off-ledger settlement entity 160 gives effect to the updated record of positions 124 before confirming this back to the DLT network's record of position 124, and thus the settlement of transactions on the distributed ledger network 122 is integrated with off-ledger asset exchange technical infrastructure.

In some examples, the transaction participants 150 may include legal owners of the assets who make transaction submissions on behalf of beneficial owners 152 of the assets. These relationships are stored in the record of positions 124. Thus the distributed ledger network 122 may maintain a mapping 126 of legal holdings to beneficial holdings of the assets, and the record of positions 124 may be updated according to the mapping 126 of legal holdings to beneficial holdings, as will be seen below. The record of positions 124 may be stored on the distributed ledger network 122, as shown, or may be linked to a record stored off-ledger.

In some examples, transaction submissions may be signed/validated by cryptographic keys prior to processing through to entry on the record of positions 124, as will be seen below. The distributed ledger network 122 may maintain a data store 128 of cryptographic keys ("SIG. KEY"), which includes cryptographic keys of the off-ledger settlement entity 160, the exchange platform 110, and the transaction participants 150, to sign/validate each transaction submission with the cryptographic keys prior to update of the record of positions 124.

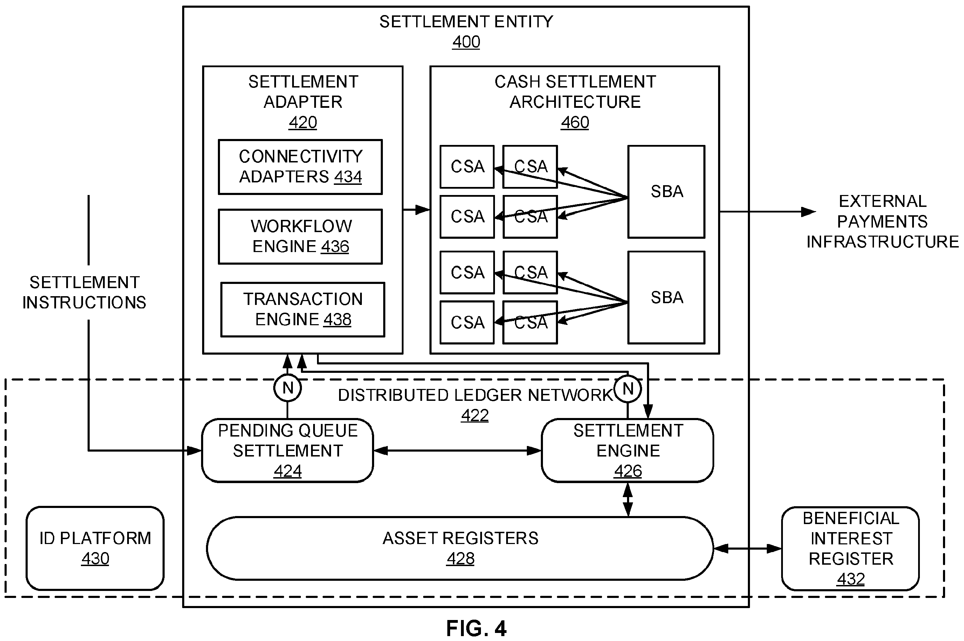

In some examples, each transaction submission may include a short code ("SC") that identifies the transaction participant 150 submitting the transaction submission. A transaction submission may include one or more short codes that identify both the legal and beneficial owners 152 of the assets involved in the transactions. Further, where the transaction submissions include short codes, these short codes may be carried through to the settlement instructions for transmission to the settlement platform 120. Communications related to transaction submissions taking place off-exchange may be made with reference to such short codes to provide an efficient way to verify the authenticity of such communications without recourse to lengthy cryptographic keys. Thus, the distributed ledger network 122 may maintain a mapping of short codes to cryptographic keys (e.g. included in the ID Platform smart contract 430 of FIG. 4). For each settlement instruction received, the settlement platform 120 may map each short code to a cryptographic key prior to validation of the respective transaction. The mapping may involve at least mapping a short code of a transaction participant short code to a cryptographic key, and if applicable, may involve mapping of a beneficial owner short code to a cryptographic key.

In some examples, the system 100 may further include observer entities 170 (e.g. regulators or other interested parties) to monitor the settlement of transactions on the distributed ledger network 122 for reporting to off-ledger entities or for direct scrutiny of the enforcement of regulatory requirements. Access to the settlement platform 120 for this purpose may be centralised through the exchange platform 110 or provided via a dedicated node, with access to information restricted as appropriate.

The exchange platform 110, settlement platform 120, transaction participants 150, beneficial owners 152, off-ledger settlement entity 160, and observer entity 170 may each include one or more computing devices having processing, memory, and communication capability, as discussed herein. Further, the exchange platform 110 may include a user interface or application programming interface for transaction participants 150 to make transaction submissions to the exchange platform 110. Similarly, the settlement platform 120 may include a user interface or application programming interface for settlement instructions to be submitted to the settlement platform 120. The exchange platform 110 may also be configured to provide a single access point for transaction participants 150 to process administrative requests to be reflected across the settlement platform 120, or to view activity relevant to the transaction participant 150 across the network (i.e. for an issuer to see details of legal and beneficial holders of its securities held through different settlement entities).

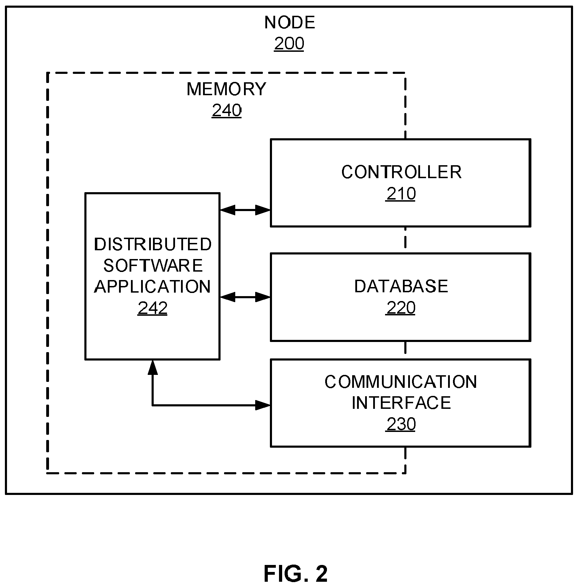

FIG. 2 is a schematic diagram of an example node 200 of a distributed ledger network. The node 200 may be similar to a node 132 of FIG. 1, and thus may be an example of a node 132 operated by the exchange platform 110, settlement platform 120, transaction participant 150, or observer entity 170. For further description of the node 200, reference may be had to the description of such elements in FIG. 1.

The node 200 includes a controller 210, database 220, communication interface 230, and memory 240. The controller 210 may include any quantity and combination of a processor, a central processing unit (CPU), a microprocessor, a microcontroller, a field-programmable gate array (FPGA), and similar. The database 220 may include non-volatile storage on which any kind of database, such as one or more SQL databases, for storing portions of a distributed ledger, may be maintained. The communication interface 230 includes programming logic enabling the node 200 to communicate over a distributed ledger network, is configured for bidirectional data communications through the network, and accordingly can include a network adaptor and driver suitable for the type of network. The controller 210, database 220, communication interface 230, and memory 240, cooperate to implement services such as identity services, cryptographic key management, scheduling, messaging, a network map cache, state manager, other custom services and the like.

The memory 240 may include non-transitory machine-readable instructions, such as a software application, to enable the node 200 to communicate with other nodes over the distributed ledger network and to interface with the distributed ledger. Such instructions may be installed at the node level across the node 200 and other nodes. In other words, the node 200 may execute a distributed software application 242. Such a distributed software application 242 may include components to implement any of the processes described herein, as operated by the exchange platform 110, settlement platform 120, transaction participant 150, or observer entity 170. Thus, as will be seen below, the distributed software application 242 may be to read from the distributed ledger, write transactions to the distributed ledger, settle transactions over the distributed ledger, initiate broadcast of notifications from the distributed ledger, and other tasks, as discussed below.

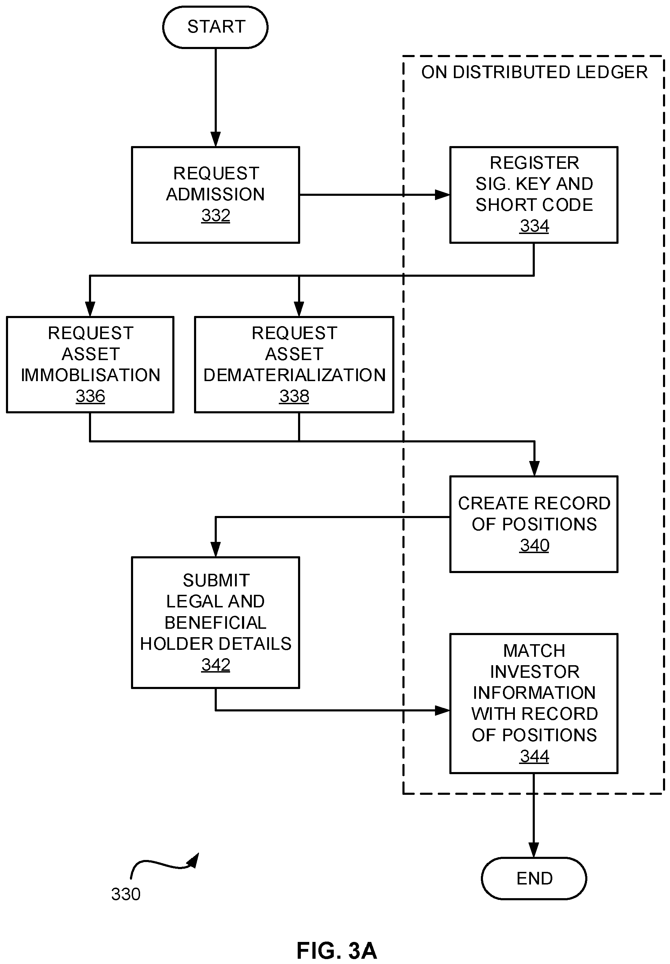

FIG. 3A is a flowchart of an example process 330 for admitting securities onto a system for processing transaction submissions over a distributed ledger network. The process 330 may be used to admit previously issued securities or newly issued securities onto such a system. The process 300 is described with reference to the system 100 of FIG. 1, but this is not limiting, and the process 300 may be applied to other systems.

At block 332, an issuer submits an admission request to the settlement platform 120. The admission request may be submitted through the exchange platform 110 by a transaction participant 150 acting on the behalf of a beneficial owner 152.

At block 334, when the issuer has not been previously registered on the settlement platform 120, a new cryptographic key pair and associated short code are generated. The short code may be registered to one or more third party identifiers (assigned for regulatory or commercial applications) in the ID platform (see ID platform smart contract 430 of Figure 4), such as an instrument identifier such as an ISIN or SEDOL (Stock Exchange Daily Official List).

At blocks 336 and 338, depending on the nature of the asset and the legal requirements surrounding issuance and/or transfer of holdings in such securities, the issuer and/or its agent may request for the assets to be immobilized at block 336 (in which case a one-to-one relationship is maintained between the asset register and assets held separately in custody) or dematerialized at block 338 (whereby the on-chain asset register confers legal title to the asset).

At block 340, a record of positions is created on the distributed ledger network. The record of positions may be without any restrictions relevant to the transfer of the securities and/or interests in the securities codified into the smart contract on an asset register (e.g. asset register smart contracts 428 of FIG. 4).

At block 342, the issuer submits details of the legal and beneficial holders of assets so that any custody arrangements are identified.

At block 344, the investors' information is matched with the record of positions on the asset register.

Thus, where previously issued securities are admitted into the system, the system enables settlement of transactions involving the securities over a distributed ledger network. Further, where new securities are admitted into the system, the system facilitates the matching of buying demand from investors against the supply of the new securities. Where a condition of the issuance of a security includes admission of securities onto an exchange platform, such conditionality can be built into a workflow through a workflow engine, such as the workflow engine 436 of FIG. 4.

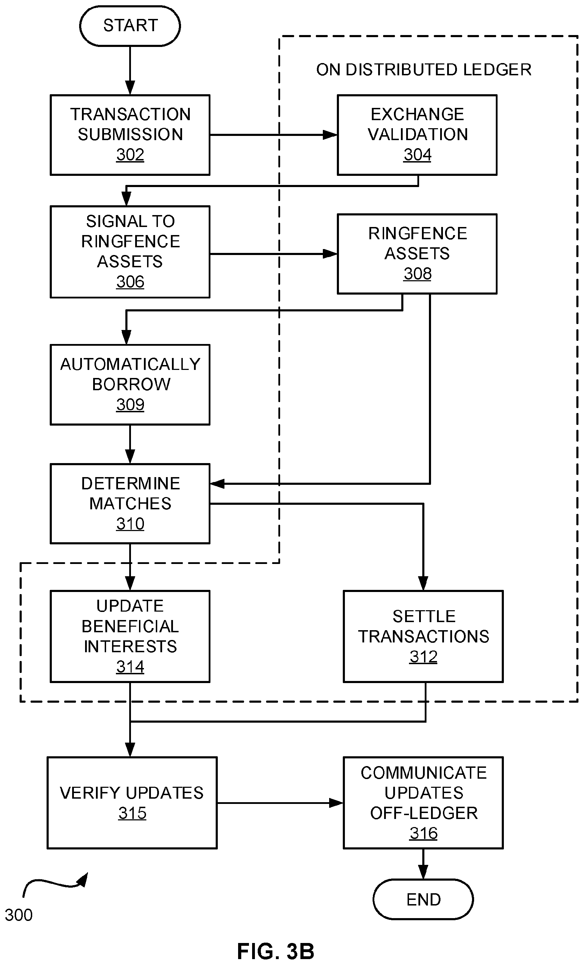

FIG. 3B is a flowchart of an example process 300 for settling transaction submissions via a distributed ledger network. Steps of the process 300 may be performed by a system for processing transaction submissions over a distributed ledger network, such as the system 100 of FIG. 1, but this is not limiting, and the process 300 may be performed using other systems and/or devices to facilitate the exchange of assets traded on an asset exchange entity.

The process 300 may be embodied in one or more non-transitory machine-readable storage media executable to cause one or more processors of one or more computing devices to execute one or more steps of the process.

At block 302, transaction submissions are made. One or more transaction submissions may include a "buy order" for an asset, and one or more transaction submissions may include a "sell order" for an asset. Transaction participants making buy orders may have pre-funded a dealing account to cover an anticipated purchase price of the buy order. Transaction participants making sell orders may have registered assets with a broker to cover an anticipated sale of the assets. Further, transaction submissions may be validated to a distributed ledger prior to submission to an asset exchange entity using cryptographic keys. The system may enforce inclusion of the relevant short codes to enable the trade to be allocated to the underlying beneficial investor(s) at the time of settlement.

At block 304, the asset exchange entity validates the transaction submissions. Validating the transaction submissions may involve verifying authenticity of the transaction submissions using cryptographic keys. Further, validating the transaction submissions may involve verifying the presence of sufficient funds on the part of buyers and assets on the part of sellers, as the case may be, for a trade to be executed between buyer and seller.

Should the system be unable to verify the presence of sufficient assets (e.g. stock for a sale or funds for a purchase), the order may be rejected, and a communication sent to the transaction participant (e.g. broker). Prior to rejection, an optional auto-borrow module could be triggered to source assets (e.g. cash, securities, or other assets) from investors who have registered that they are willing to act as asset lenders according to pre-determined criteria, which may be set out in smart contracts in the ID platform (see ID Platform 430 of Figure 4).

At block 306, once transaction submissions are validated, signals are transmitted to a settlement entity to ringfence an amount of the relevant asset (e.g. stock or cash) held by the transaction participants pending matches being found for the transaction submissions, preventing double spend. An amount of asset that is ringfenced is restricted from being allocated for the settlement of any transaction other than the currently pending transaction that is being settled.

At block 308, the locking of the asset is implemented at the settlement entity, whereby the asset is ringfenced for settlement.

At block 309, assets, such as stock or funds, may be automatically borrowed by a transaction participant to cover consideration required for the intended transaction to be settled. Such assets may be sourced from investors who have registered that they are willing to act as asset lenders according to pre-determined criteria (whereby such intentions are registered in the ID platform).

At block 310, the asset exchange entity determines matches for transaction submissions. For example, buy orders are matched with sell orders. Determining the matches results in generation of pending settlement instructions comprising a set of net positions held by transaction participants with respect to the transaction submissions for exchange of assets, authorised via an off-ledger exchange entity.

At block 312, the transaction submissions are settled on the distributed ledger according to the settlement instructions. This involves authorisation by the settlement entity, whereby the settlement instructions may only move from pending status to final once the settlement entity has authorised them for implementation on the distributed ledger through the cryptographic signing mechanism. Simultaneously, at block 314, a record of beneficial interests of the transaction participants is updated to reflect any changes in beneficial interests resulting from the transaction submissions. That is, the beneficial interest of a purchaser of an asset may be increased, and the beneficial interest of a seller of an asset may be decreased.

At block 315, verification procedures are undertaken to ensure such updates are sent to the correct parties, prior to dissemination.

At block 316, updates to legal and beneficial interests are communicated off-ledger. For example, the settlement system may update an issuer of an asset with legal and beneficial ownership of assets it has issued. As another example, the settlement entity may update a central bank, other banking infrastructure participants (e.g. where commercial bank money is used) or custodian of another form of consideration (all together "Payments Infrastructure") to reflect the satisfaction of a payment obligation from one transaction participant to another.

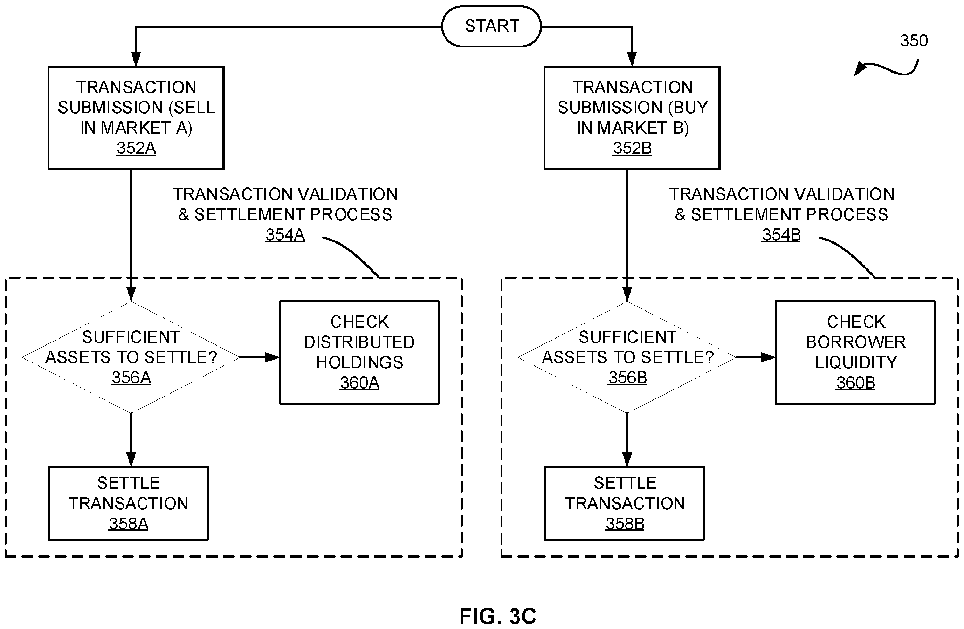

FIG. 3C is a flowchart of an example process 350 for settling a transaction via a distributed ledger network involving multiple settlement entities. In some systems, trading venues may only have links into certain settlement entities or according to national silos. Participants trading on those venues may hold fungible stock in different settlement entities. However, those settlement entities may not have links in place to allow for the automated transfer of assets between settlement entities, meaning that a manual process of withdrawing and depositing assets needs to occur to ensure a transaction which has matched on the trading venue will not fail at the settlement stage. The process 350 details how an investor trading on Markets A and B can complete transactions on either venue using assets in custody at a settlement system associated with Market B.

At block 352A, a transaction participant makes a transaction submission to sell an asset on Market A. Next, block 354A represents a transaction validation and settlement process, which may be similar to, for example, the process 300 of FIG. 3B. As part of this process, it is determined at block 356A whether the transaction participant holds sufficient assets to settle the sell order. If sufficient assets are held, the transaction proceeds to settlement at block 358A. If sufficient assets are not held, distributed holdings may be checked at block 360A. The distributed holdings may be checked via a distributed accounts relay hosted on a distributed ledger.

Similarly, at block 352B, a transaction participant makes a transaction submission to buy an asset on Market B. Next, block 354B represents a transaction validation and settlement process, which may be similar to, for example, the process 300 of FIG. 3B. As part of this process, it is determined at block 356B whether the transaction participant holds sufficient assets to settle the buy order. If sufficient assets are held, the transaction proceeds to settlement at block 358B. If sufficient assets are not held, borrower liquidity may be checked at block 360B. As discussed herein, an auto-borrow module could be triggered to source assets from investors who have registered that they are willing to act as asset lenders according to pre-determined criteria.

Thus, where a settlement engine determines that there are insufficient assets to honour the intended order, a check to the distributed holdings of the investor held across multiple settlement systems on the network can determine whether assets are available elsewhere on the network. Where such holdings are identified, the system can instigate a nil-gain nil-loss transfer between asset registers held in the respective settlement systems to allow the trade to proceed. An investor's pre-authorisation for assets to be transferred in such way can be registered in an ID platform.

Where for legal, taxation or other reasons an asset cannot be globally registered and may only be maintained on one asset register in a particular settlement system for a particular market, a similar effect can be achieved through the creation of cross-holdings of interests between settlement entities, providing that when an entry in one asset register is increased/reduced, a corresponding entry is made on an asset register in another settlement system to confer an interest in the assets in the other settlement system.

FIG. 4 is a schematic diagram of an example settlement entity 400 using the system for processing transaction submissions over a distributed ledger network. In the present example, the settlement entity 400 includes a settlement adapter 420, which may be similar to the settlement platform 120 of FIG. 1, hosted by the settlement entity 400. For additional description of the settlement adapter 420, including description of mappings of legal holdings to beneficial holdings, cryptographic key stores, which have been omitted from FIG. 4 for brevity, reference may be had to the settlement platform 120 of FIG. 1.

Similar to the settlement platform 120 of FIG. 1, the settlement adapter 420 of FIG. 4 hosts a private distributed ledger network 422 to store a record of positions held by the transaction participants with respect to the assets exchanged via an off-ledger asset exchange entity. Further, the distributed ledger network 422 includes a set of smart contracts to facilitate processing of transaction submissions on the distributed ledger network 422, including a pending queue settlement smart contract 424, a settlement engine smart contract 426, an asset register smart contracts 428, an ID platform smart contract 430, and a beneficial interest register smart contract 432.

The settlement adapter 420 includes connectivity adapters 434, a workflow engine 436, and a transaction engine 438. The connectivity adapters 434 provide a communication interface to receive transaction submissions from off-ledger sources, and to read and obtain information from the distributed ledger network 422. The workflow engine 436 is a rules-based engine that allows a set of dynamically configurable rules specific to local settlement regulatory requirements, to drive business logic around validation, verification and authorization of settlement instructions queued. The workflow engine 436 may also facilitate business logic such as transaction re-ordering algorithms, transaction netting or any other arbitrary logic, for example enabling delivery versus payment, even where the asset register sits on-ledger and the cash settlement architecture sits off-ledger. Further, that the workflow engine 436 may be used to codify specifications bespoke to a particular settlement entity. The transaction engine 438 generates a set of transactions to carry out settlement instructions on the private distributed ledger.

The settlement entity 400 further includes a cash settlement architecture 460 corresponding to off-ledger technical infrastructure for settling transactions for assets traded on the off-ledger exchange. The cash settlement architecture 460 includes settlement bank accounts ("SBA") and client-specific accounts ("CSA"), reflecting the fact that multiple participants in the system may bank with the same entity. Upon instruction by the settlement adapter 420, the cash settlement architecture 460 moves cash held at SBAs between CSAs, as appropriate; delivery of cash and corresponding movement of stock is reflected on the distributed ledger network 422 concluding settlement as required by regulation as applicable.

In some examples, the transaction submissions, and thus the settlement instructions, may include short codes that identify the transaction participants submitting the transaction submissions, and further, may include short codes identifying the beneficial owners of the assets underlying the transactions. In either case, the settlement instructions include information allowing the beneficial interest register to be updated. In such examples, the ID platform smart contract 430 may maintain mappings of short codes to cryptographic keys for transaction participants and beneficial owners.

The ID platform smart contract 430 is accessible to parties having access to the distributed ledger network 422 other than the settlement entity 400, such as, for example, an exchange platform (e.g. exchange platform 110 of FIG. 1), for recording transfers of ownership not related to trades being settled by the settlement entity 400. Such transfers of ownership may include inheritances, name changes, or other changes in title of ownership of assets.

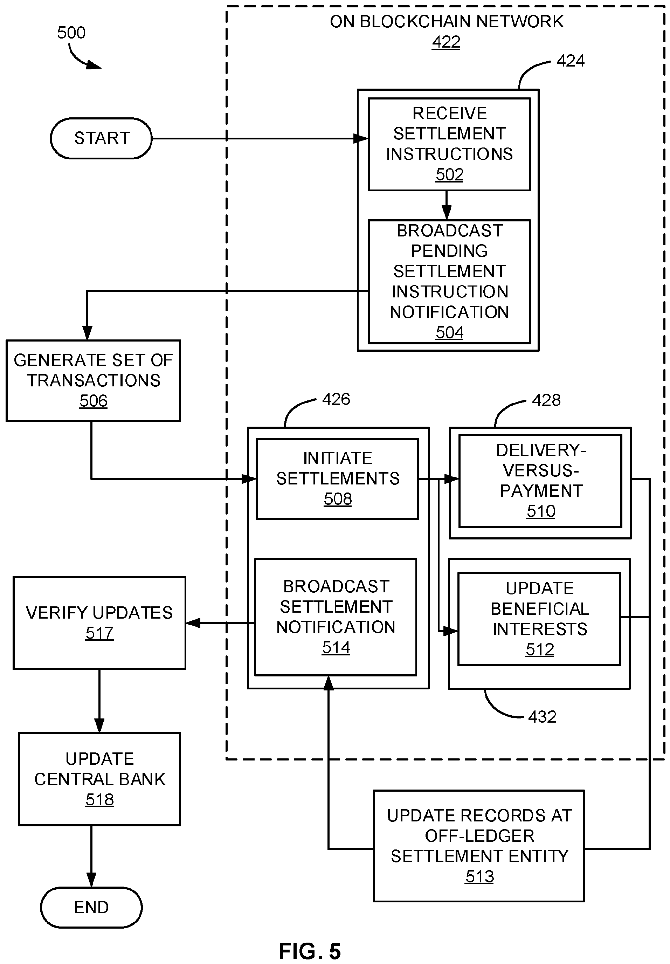

In operation, the settlement entity receives settlement instructions from an exchange platform and executes the settlement instructions over the distributed ledger. This process is described in greater detail with reference to FIG. 5, which depicts a flowchart of another example process 500 for settling transaction submissions via a distributed ledger network. The process 500 is described with reference to the elements of the settlement entity 400 of FIG. 4.

At step 502, settlement instructions are received on a private distributed ledger. The settlement instructions include sets of net positions held by transaction participants with respect to transaction submissions submitted to an exchange platform by the transaction participants for exchange of assets via an off-ledger exchange entity. With reference to FIG. 4, settlement instructions are submitted to the pending queue settlement smart contract 424. The submission may be made via a market-signed distributed ledger transaction. These transactions may be submitted directly over the distributed ledger network 422 (as shown), or to the settlement entity 400 through a commonly-used industry transport protocol. If sent to the settlement entity 400, the transactions are received by the settlement adapter 420, which extracts the market-signed transactions and dispatches the transactions to the pending queue settlement smart contract 424.

At step 504, a notification of receipt of the pending settlement instructions is broadcast from the private distributed ledger. With reference to FIG. 4, after settlement instructions are received, the pending settlement queue broadcasts a notification event ("N") from the pending queue settlement smart contract 424, which is identified by the settlement adapter 420.

At step 506, a set of transactions to carry out the settlement instructions on the private distributed ledger is generated. With reference to FIG. 4, a set of transactions counter-signed by the settlement entity 400 is generated to be sent to the settlement engine smart contract 426.

In some examples, the settlement entity 400 may maintain a mapping of legal holdings to beneficial holdings of the assets. In such examples, generating the set of transactions may involve using the mapping to map legal holdings of the assets to beneficial holdings of the assets. In other examples, the settlement instructions may include mappings of legal holdings to beneficial holdings. In still other examples, a mapping of beneficial holdings to legal holdings may be maintained on the distributed ledger network 422, such as on the ID platform smart contract 430.

In some examples, the settlement entity 400 may maintain cryptographic keys of a settlement platform, the exchange platform, and the transaction participants. In such examples, the process 500 may involve prior to generating the set of transactions, signing/validating each transaction submission with the cryptographic keys.

In examples in which the settlement instructions include short codes, the process 500 may involve, for each respective transaction submission or settlement instruction, mapping, each short code to a cryptographic key prior to validation of the respective transaction submission. Cryptographic key-to-short code mappings may be obtained from the ID platform smart contract 430.

At step 508, execution of the set of transactions is initiated on the private distributed ledger. With reference to FIG. 4, the settlement adapter 420 sends an instruction to the settlement engine smart contract 426 to initiate settlement. The settlement engine smart contract 426 dequeues a user-configurable sized batch of settlement instructions from the pending queue settlement smart contract 424. Each settlement instruction is then executed atomically. For each settlement instruction, delivery-versus-payment ("DVP") is initiated on the asset register smart contracts 428 at step 510, moving securities against cash (between legal holders) as represented in the smart contract register, which may be net of associated cash fees of any type. The cash side may represent on-chain the balances of equivalent client-specific account designations in the off-ledger technical infrastructure of the settlement entity 400. These balances are synchronized at appropriate intervals, which may be dictated by linkage of the settlement entity 400 to External Payments Infrastructure such as a central bank or other banking infrastructure. Simultaneously, the beneficial interest register smart contract 432 is updated in parallel at step 512, moving securities holdings between beneficiaries, as represented in the smart contract register.

At step 513, an update to a record of allocated positions within an overall balance on an asset register is transmitted to an off-ledger settlement entity. The record of allocations defines obligations held by the transaction participants with respect to the assets, the update based on execution of the set of transactions. With reference to FIG. 4, an instruction is submitted to off-ledger technical infrastructure of the settlement entity 400, including the cash settlement architecture 460, to update records so they reconcile with the equivalent settled balances in the asset register smart contracts 428. The system logic may enforce that a transaction cannot be deemed settled until all steps 508 to 512 have successfully concluded.

At step 514, a notification of completion of the settlement instructions is broadcast from the private distributed ledger. With reference to FIG. 4, immediately as settlement occurs on the distributed ledger, a notification event is broadcast and identified by the settlement adapter 420. The settlement adapter 420 may be configured to batch such notifications and to respond on a periodic basis, or to respond in real-time.

At step 517, verification procedures are undertaken to ensure that settlement updates are sent to the correct parties, prior to dissemination.

At step 518, off-ledger technical infrastructure of the settlement entity 400 updates External Payments Infrastructure to reflect the movement of funds from one transaction participant to another.

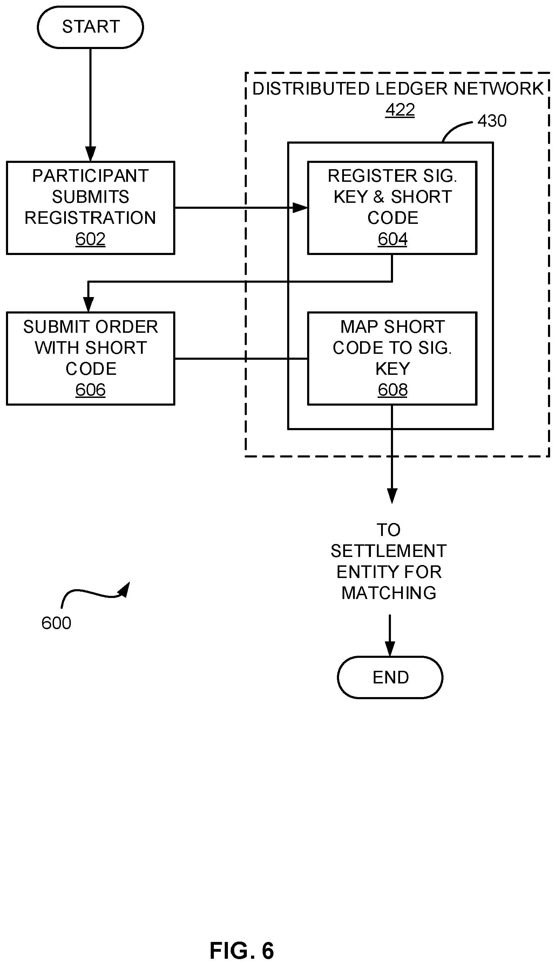

FIG. 6 is a flowchart of an example process 600 for registering cryptographic keys and short codes for transaction participants in a system for processing transactions over a distributed ledger network, such as transaction participants 150 in the system 100 of FIG. 1 and underlying clients who have a beneficial interest in an asset recorded in an asset register on the distributed ledger network. The process 600 is described with reference to the elements of the settlement entity 400 of FIG. 4.

At step 602, a transaction participant submits a registration to engage in transactions over the distributed ledger network 422. A cryptographic key pair and corresponding short code is generated for the transaction participant. A cryptographic key pair and short code may also be generated for any party with a beneficial interest in assets recorded in an asset register on the distributed ledger network ("Beneficial Investor"), to the extent this has not already been registered with a different transaction participant. Multiple system participants may register their authorization to act on behalf of a particular Beneficial Investor at any one time.

At step 604, the cryptographic key and corresponding short code for the transaction participant and Beneficial Investor is stored on the distributed ledger in the ID platform smart contract 430. The ID platform smart contract contains details of the requisite permissions and/or authorisation to enable the transaction participant to submit instructions to the settlement platform which will update the beneficial interest register simultaneously at the time of settlement.

Subsequently, when a transaction participant wishes to submit a transaction submission, the submission is made with the short code of the transaction participant as an identifier, at step 606, to an asset exchange platform along with the short code of the Beneficial Investor, if applicable.

At step 608, the asset exchange platform maps the short code to a public key via the ID platform smart contract 430 to generate and sign a settlement instruction, which can be processed by a settlement entity for matching.

Thus, transaction submissions may be made with short codes as identifiers to provide an efficient way to verify the authenticity of such communications, and that the sender has the appropriate permissions to send instructions on behalf of their clients (e.g. the Beneficial Investor), if applicable, without recourse to transmission of lengthy cryptographic keys. Further, cryptographic keys can be remapped to short codes for post-settlement analytics, audit, reporting, and data enrichment and to reflect changes in client-agent relationships. Further, the use of short codes to identify transaction participants allows for the integration of multiple distributed ledger networks in which transaction participants may use separate cryptographic keys for each distributed ledger network.

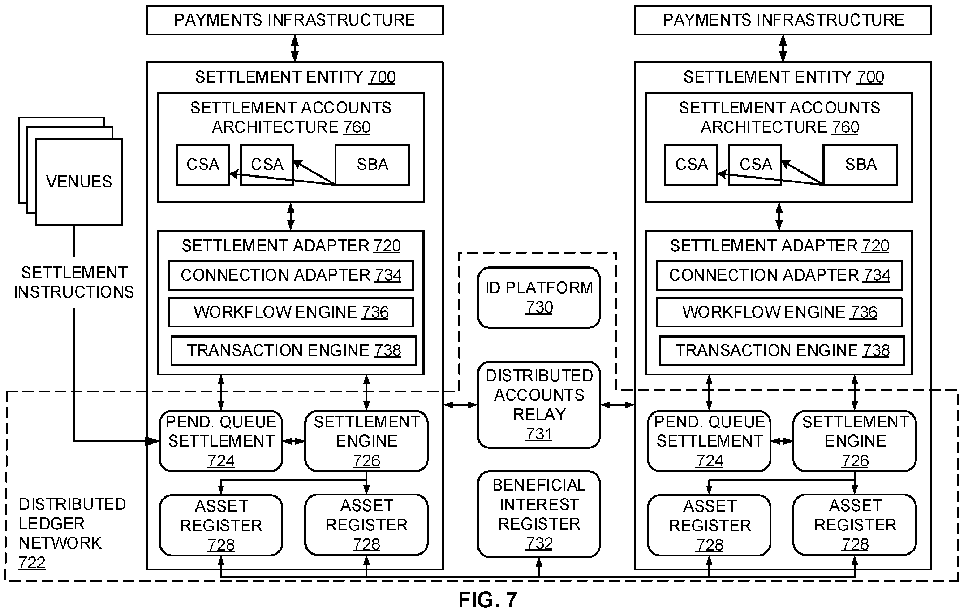

FIG. 7 is a schematic diagram demonstrating how a number of settlement entities 700 can connect to the settlement platform for processing transaction submissions over a distributed ledger network 722. Each settlement entity 700 may have specific rights as regards their ability to authorise transactions in specific jurisdictions, depending on any regulatory clearances relevant to the asset in question.

Each settlement entity 700 may be similar to the settlement entity 400 of FIG. 4, with elements numbered in the "700" series rather than the "400" series, and therefore includes a settlement adapter 720, connectivity adapters 734, workflow engine 736, transaction engine 738, a settlement accounts architecture 760 (reflecting their connectivity to local payments infrastructure), and distributed ledger network 722 hosting a pending queue settlement smart contract 724, settlement engine smart contract 726, ID Platform smart contract 730, and beneficial interest register smart contract 732. For further description of the above elements, description of like elements of the settlement entity 400 of FIG. 4 may be referenced.

In addition, the distributed ledger network 722 includes a plurality of asset registers 728, each corresponding to a register of assets for a particular jurisdiction. For example, a first asset register 728 may be a register of assets corresponding to assets held in the United Kingdom, and a second asset register 728 may be a register of assets corresponding to assets held in the United States. The assets held in each jurisdiction may be governed by different regulatory regimes and taxation requirements, and thus the respective asset registers 728 may be treated differently by the settlement engine smart contract 726, which may be programmed to conduct settlements in accordance with the regulatory requirements of each of the asset registers 728 and net of any jurisdiction specific transaction fees. Although only two settlement entities 700 are shown, it is contemplated that any number of settlement entities 700 may similarly connect to the settlement platform. Further, each of the asset registers 728 is linked to a settlement adapter 720 which has been customized for a particular settlement entity 700 in a particular jurisdiction. In this way, the platform would also allow the linking of settlement entities using different DLT protocols. Further, when a transaction participant does not hold sufficient assets in a particular asset register 728 held in a particular jurisdiction to settle a currently pending order, a distributed holdings relay 731 may be used to access assets held in other asset registers 728 held in other jurisdictions to provide sufficient assets to settle the currently pending order. This process is described in greater detail above with reference to the process 350 of FIG. 3C.

The system also enables investors to maintain a consolidated view of and trade interests in assets held across a multitude of jurisdictions and time zones. Thus, for a globally registered asset, the system can enable settlement of assets traded on venues in different time zones by providing automated links between the settlement systems associated with such venues on the blockchain network. An example of a process for settling transactions using assets held across multiple jurisdictions is provided with reference to FIG. 3C above.

Beneficial investor and transaction participant information contained within the centralized ID Platform smart contract 730 may include any restrictions on the investor's ability to hold an interest in any of the assets recorded on any of the asset registers on the network, for example due to restrictions by geography or the regulatory classification of the investor (e.g. retail or professional status).

Further, each of the asset registers 728 is connected to the centralized beneficial interest register smart contract 732 to maintain a centralized store of updated beneficial interests corresponding to assets held in the various jurisdictions.

As discussed above, each settlement instruction may include a short code that identifies the transaction participant submitting the transaction submission to avoid the transmission of lengthy cryptographic keys. These short codes may be used to make settlement instructions related to any of the jurisdictions covered by the asset registers 728. Therefore, the distributed ledger network 722 provides an efficient hub for receiving settlement instructions related to transfers of assets held in various jurisdictions which may be under the authority of different settlement entities, and for processing such transactions on a distributed ledger according to the particular regulatory requirements of each jurisdiction, and for maintaining a centralized store of updated beneficial interests corresponding to assets held in the various jurisdictions.

It should be recognized that features and aspects of the various examples provided above can be combined into further examples that also fall within the scope of the present disclosure. The scope of the claims should not be limited by the above examples but should be given the broadest interpretation consistent with the description as a whole.

## Claims

1. A system for processing transaction submissions over a distributed ledger network, the system comprising:
an exchange platform to generate settlement instructions comprising a set of net positions held by transaction participants with respect to transaction submissions submitted to the exchange platform by the transaction participants for exchange of assets via an off-ledger settlement entity;
a settlement platform to:
host a private distributed ledger network to store a record of positions held by the transaction participants with respect to the assets;
update the record of positions according to the settlement instructions; and
transmit an update of the record of positions to the off-ledger settlement entity.

2. The system of claim 1, wherein the settlement platform is further to maintain a mapping of legal holdings to beneficial holdings of the assets, and wherein the record of positions is updated further according to the mapping.

3. The system of claim 1 or claim 2, wherein the settlement platform is further to maintain a data store of cryptographic keys of the settlement platform, the exchange platform, and the transaction participants, and to validate each transaction submission with the cryptographic keys prior to update of the record of positions.

4. The system of claim 3, wherein:
each transaction submission includes a short code that identifies the transaction participant submitting the transaction submission; and
the private distributed ledger network maintains a mapping of short codes to cryptographic keys, and, for each respective transaction submission, and the settlement platform is to map each short code to a cryptographic key prior to validation of the respective transaction submission.

5. A process for settling transaction submissions via a distributed ledger network, the process comprising:
receiving, on a private distributed ledger, settlement instructions, the settlement instructions comprising a set of net positions held by transaction participants with respect to transaction submissions submitted to an exchange platform by the transaction participants for exchange of assets via an off-ledger settlement entity;
broadcasting, from the private distributed ledger, a notification of receipt of the settlement instructions;
generating a set of transactions to carry out the settlement instructions on the private distributed ledger;
initiating, on the private distributed ledger, execution of the set of transactions;
broadcasting, from the private distributed ledger, a notification of completion of the settlement instructions; and
transmitting an update to a record of positions to the off-ledger settlement entity, the record of positions defining obligations held by the transaction participants with respect to the assets, the update based on execution of the set of transactions, the update to the record of positions for registration at the off-ledger settlement entity.

6. The process of claim 5, wherein:
the process further comprises maintaining a mapping of legal holdings to beneficial holdings of the assets; and
generating the set of transactions involves using the mapping to map legal holdings of the assets to beneficial holdings of the assets.

7. The process of claim 5 or claim 6, wherein the process further comprises:
maintaining cryptographic keys of a settlement entity, the exchange platform, and the transaction participants; and
prior to generating the set of transactions, validating each transaction submission with the cryptographic keys.

8. The process of claim 7, wherein:
each transaction submission includes a short code that identifies the transaction participant submitting the transaction submission; and
the process further comprises:
maintaining, on the private distributed ledger, a mapping of short codes to cryptographic keys; and,
for each respective transaction submission, mapping each short code to a cryptographic key prior to validation of the respective transaction submission.

9. The process of claim 8, wherein the process further comprises maintaining, on the private distributed ledger, a mapping of short codes to third party identifiers.

10. The process of any one of claims 5 to 9, wherein the process further comprises:
prior to initiating execution of the set of transactions, determining whether a particular transaction participant is a legal owner of a sufficient quantity of assets to settle a subset of transactions of which the particular transaction participant is a participant;
upon determining that the particular transaction participant is the legal owner of the sufficient quantity of assets, proceeding to initiate execution of the set of transactions; and
upon determining that the particular transaction participant is not the legal owner of the sufficient quantity of assets, proceeding to obtain a transferred quantity of assets sufficient to settle the subset of transactions of which the particular transaction participant is a participant.

11. The process of claim 10, wherein:
determining whether the particular transaction participant is the legal owner of the sufficient quantity of assets comprises determining whether the particular transaction participant is the legal owner of the sufficient quantity of assets held in a first account at a first settlement entity; and
obtaining the transferred quantity of assets comprises obtaining the transferred quantity of assets from a second account at a second settlement entity.

12. The process of claim 11, wherein the first settlement entity corresponds to a first jurisdiction and the second settlement entity corresponds to a second jurisdiction.

13. The process of claim 11 or claim 12, wherein the process further comprises:
upon obtaining the transferred quantity of assets from the second account at the second settlement entity, transferring an equal value of assets from the first account to the second account in consideration for the transferred quantity of assets.

14. A system for processing transaction submissions over a distributed ledger network, the system comprising:
a first exchange platform corresponding to a first jurisdiction, the first exchange platform to generate settlement instructions comprising a set of net positions held by transaction participants with respect to transaction submissions submitted to the first exchange platform by the transaction participants for exchange of assets via a first off-ledger settlement entity;
a second exchange platform corresponding to a second jurisdiction, the second exchange platform to generate settlement instructions comprising a set of net positions held by transaction participants with respect to transaction submissions submitted to the second exchange platform by the transaction participants for exchange of assets via a second off-ledger settlement entity; and
a settlement platform to:
host a private distributed ledger network to store a record of positions held by the transaction participants with respect to assets traded at the first exchange platform and the second exchange platform;
update the record of positions according to the settlement instructions generated at the first exchange platform and the second exchange platform; and
transmit an update of the record of positions to the first off-ledger settlement entity and the second off-ledger settlement entity.

15. The system of claim 14, wherein:
the private distributed ledger network is to:
host a first asset register corresponding to the first exchange platform;
host a second asset register corresponding to the second exchange platform; and
host a distributed accounts relay to obtain a transferred quantity of assets from the second asset register to enable a particular transaction participant to settle a transaction involving a trade for an asset held at the first asset register for which the particular transaction participant has insufficient assets at the first asset register to settle.
